# EUROPEAN PATENT SPECIFICATION

(11) **EP 3 471 551 B1**
(45) Date of publication and mention of the grant of the patent: **28.02.2024**
(21) Application number: 17715808.6
(22) Date of filing: 07.03.2017
(51) Int. Cl.: A23J 1/00, A23L 5/00, A23L 5/20, A23L 19/00, A23L 27/10, A23L 27/16, A23L 5/42, A23L 29/20, A23L 27/00, A23L 29/206, A23L 5/43, A23L 33/185

(54) **PROTEIN COMPOSITION OBTAINED FROM ALLIUM**
PROTEINZUSAMMENSETZUNG AUS ALLIUM
COMPOSITION DE PROTÉINES OBTENUES À PARTIR DE PLANTES DU GENRE ALLIUM

(30) Priority: 16.06.2016 EP 16174802
(43) Date of publication of application: 24.04.2019
(73) Proprietor: Biorefinery Royalties B.V., 6598 AT Heijen (NL)
(72) Inventor: DERKSEN, Johannes Theodorus Petrus, 6598 AT Heijen (NL); ZWART, Lourens, 7255 BW Hengelo (NL)
(74) Representative: V.O.
(86) International application number: PCT/NL2017/050134
(87) International publication number: WO 2017/217838

(56) References cited:
- CN-B- 103 598 544
- US-A- 4 144 355
- US-A1- 2010 316 660
- US-A1- 2015 017 308
- DATABASE WPI Week 201430 Thomson Scientific, London, GB; AN 2014-G28140 XP002770653, & CN 103 590 277 A (UNIV SHANGHAI) 19 February 2014 (2014-02-19)
- VANESA BENÍTEZ ET AL: "Characterization of Industrial Onion Wastes (Allium cepa L.): Dietary Fibre and Bioactive Compounds", PLANTS FOODS FOR HUMAN NUTRITION., vol. 66, no. 1, 12 February 2011 (2011-02-12), pages 48-57, XP055291820, NL ISSN: 0921-9668, DOI: 10.1007/s11130-011-0212-x

## Description

### Field of the Invention

The invention is in the field of recovering valuable substances from bulbs, including parts of these bulbs, of the plant species known as *Allium cepa,* such as from onions and shallots. Particularly, the invention pertains to recovering protein and fibre fractions with useful functional properties from such bulbs.

### Background of the Invention

Onions (the bulbs of *Allium cepa*) are widely used in food; in many cases in processed form, such as onion rings and pieces. Industrial processing of onions to such products thereby frequently result in residual streams comprising the outer layers of the onions, and the two top and bottom ends of the onions. Where hereinafter reference is made to "tops" this includes both the top end and the bottom end of the bulb.

It is very much desired to find valuable, e.g., food grade, uses for this substantial amount of biomass (up to one third of the processed onion) which are now often wasted/discarded or used in low value applications for animal feed or composting.

Onions are frequently used for their potential to provide flavour and taste. This presents the more common use of onions (in forms such as pieces or rings, or in the form of a dried powder). Further, onions also provide nutrients and phytochemicals, such as the flavonoid quercetin, which is an antioxidant. Onions are known to contain calcium, iron, as well as protein.

Whilst onions, and related bulbs, are thus a source of valuable ingredients, this source has not yet been feasibly unlocked. The invention seeks to provide a method of accomplishing this. Particularly, in order to add to the usefulness, and economic value, of the aforementioned residues, it is desired to provide a process for the recovery of protein and other valuable products from onions and onion residue streams.

Background art includes CN 103 598 544 B; US 2010/316660 A1; CN 103 590 277 A; US 4,144,355; US 2015/017308 A1; Benitez et al., Plants Foods for Human Nutrition 2011, vol. 66, p. 48-57.

### Summary of the Invention

In order to better address one or more of the foregoing desires, the invention provides, in one aspect, a protein composition in the form of a dry protein concentrate comprising 25 wt.% to 30 wt.% of protein obtainable from bulbs of a plant of the species *Allium cepa* by a process comprising the steps of:
(a) providing a mass comprising material of the *Allium cepa* bulbs;
(b) subjecting the material to a mechanical treatment selected from the group consisting of disrupting, homogenization, and a combination thereof;
(c) combining the mass with a basic substance under mixing, so as to obtain an aqueous slurry, wherein the basic substance is a basic liquid having a pH of from 8 to 9;
(d) subjecting the slurry to separation so as to obtain a liquid fraction and one or more solid fractions;
(e) optionally subjecting the solid fraction(s) obtained under (d) to concentration and/or drying steps so as to obtain a dry product comprising the fibres;
(f) subjecting the liquid fraction obtained under (d) to acidification so as to obtain an acid-treated liquid having a pH in a range of from 4 - 4.5;
(g) subjecting the acid-treated liquid to separation so as to obtain an aqueous process liquid and a liquid gel;
(h) subjecting the liquid gel to concentration and/or drying steps so as to obtain a dry product comprising the protein, said process being conducted at ambient temperature, wherein in steps (c) and (f) the temperature is below 30°C, the temperature being controlled by appropriate cooling to the extent necessary.

In another aspect, the invention presents the use of a protein composition as referred to in the preceding paragraph, as a food ingredient, particularly as a taste and/or flavour enhancer and/or as a food colourant.

In a further aspect, the invention provides a process for the recovery of a protein-rich fraction and a fibre-rich fraction from bulbs of the species Allium cepa, and particularly of onion residues including tops and skins, the process comprising the above-identified steps (a) to (h).

In a still further aspect, the invention provides method of recovering multiple useful products from the skins and tops residues of onions processed for use as a food, the method comprising subjecting said residues to the process as defined in claim 7, and isolating a dry protein concentrate comprising 20 wt.% to 30 wt.% of protein and a fibre-containing composition comprising 60% to 70% by weight of fibre.

### Brief description of the drawings

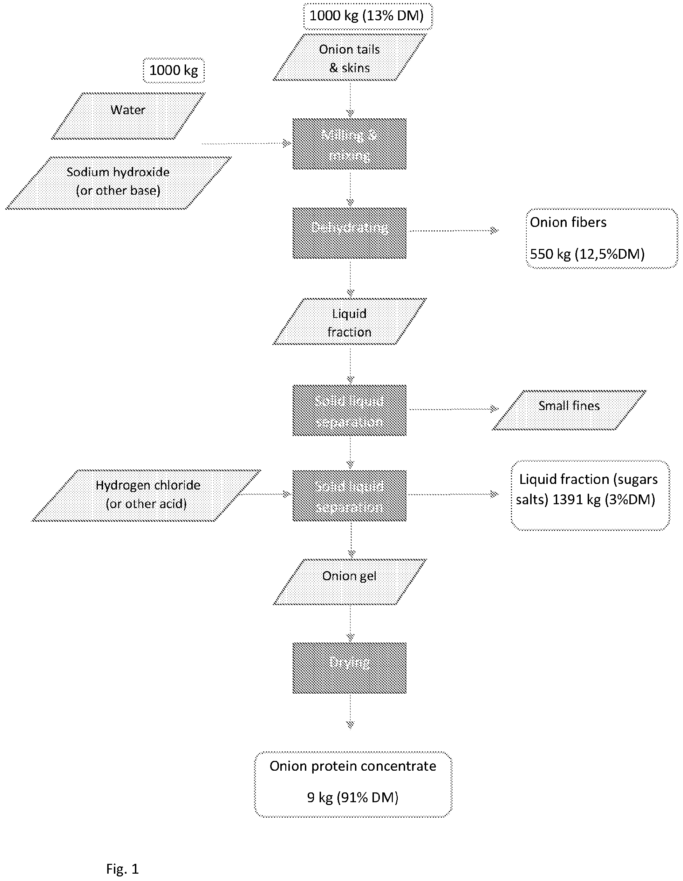

Fig. 1 depicts a general process scheme outlining a preferred general embodiment of the invention.

### Detailed description of the Invention

In a general sense, the invention is based on the judicious insight to unlock the potentially valuable components present in bulbs and its processing residue streams of a plant of the species *Allium cepa* by means of a biomass pre-treatment and protein recovery process. Particularly, the invention unlocks an unexpected potential from such bulbs, by a protein recovery process similar to such processes as are used for, e.g., aquatic plant species.

The process of the invention involves a sequence of steps as discussed hereinafter. As background to further details on such a process, reference is made to NL 1038645 and to EP2547219.

The process starts with providing a mass comprising material of said bulbs. The bulbs are referred to as forming the origin of the mass. This does not mean that the source of the mass necessarily comprises whole bulbs. The source of the mass expressly includes parts of the bulbs.

Depending on the size of the bulbs, which will differ between the various varieties belonging to the species *Allium cepa,* the material may consist of whole bulbs, of pieces of said bulbs, pieces of parts of said bulbs, or of combinations thereof. Preferably the material has a size such that the longest dimension of the bulbs or pieces ranges from 15 mm to 15 cm. Preferably, the longest dimension of the bulbs or pieces does not exceed 10 cm, a typically preferred size being in a range (for the longest dimension) of from 2 to 10 cm. preferably 5-10 cm.

The bulbs can particularly be onions or shallots. Preferably, the bulbs are provided in the form of residues of processing the respective bulbs for food purposes. This will generally be understood to refer to residues of onions, including yellow onions, red onions, sweet onions, and shallots. In an interesting embodiment, the mass that is subjected to the process of the invention comprises skins and tops of processed bulbs. In another interesting embodiment, the mass comprises onions that have failed to meet the standard for processing as a food (e.g., undersized onions or damaged onions). It will be understood that, typically, these skins and tops are no longer associated with the rest of the bulb. Preferably, the mass consists essentially of the tops and the bulbs, such as in the event of residues of onions processed for use as a food. It is also possible to first separate part of the outer skins from the tops, and use either of the two in the process of the invention. Most preferably, the mass is untreated residue from onion cutting.

In order to prepare for subsequent processing, the material is subjected to a mechanical treatment. This treatment is selected from the group consisting of disrupting, homogenization, and a combination thereof. Suitable milling or homogenizing equipment to conduct such treatments is known to the skilled person and includes, e.g., blenders or ball mills.

In a next step, the mass is combined with a basic substance, such as an aqueous alkaline liquid, and subjected to mixing in the presence of water, so as to provide an aqueous slurry comprising solids and liquid. The basic substance is a basic liquid. In the event that the basic substance is an aqueous alkaline liquid, it will generally not be necessary to separately add water. The pH of the basic liquid is from 8 to 9. The liquid typically is a diluted strong base, such as a solution of sodium hydroxide. Typically, the concentration range of such solution is 0, 1 - 1.0 M. The mixing with the basic material, can be conducted using any conventional mixing, stirring, or homogenizing apparatus.

The slurry is subjected to separation, so as to obtain a liquid fraction and a solid fraction. This separation can be conducted by means of various techniques, such as centrifuging or filtering. Filtering is preferred, and more preferably the filtering is conducted in conjunction with pressing. The pressing in combination with filtering serves to separate off a fibrous solid, as a potentially valuable by-product of the process of the invention. Protein is retained in, depending on the separation technique used, a supernatant or a filtrate (i.e. in the liquid fraction). Typical filter pore sizes are 500 -1000 µm. Preferably, the solid/liquid separation involves a further step of decanting the filtrate, so as to separate off a remaining amount of fibrous material.

The fibrous by-product can be usefully applied in feed or food as a dietary fibre. In this respect, the invention also pertains to a process, as described hereinbefore and hereinafter, wherein a dietary fibre is obtained as a product from the solid fractions in the above-identified step (d). Thereby a composition is obtained that has a fibre content above that of the original bulbs, i.e., generally higher than 20 wt.%, such as higher than 30 wt.%. As a result of the aforementioned process steps, the fibre-containing composition is particularly rich in fibre originating from *Allium cepa,* which is reflected by the fact that said composition comprises at least 50% by weight of fibre, such as 60% to 80 % by weight, particularly of from 65% to 70% by weight. Interestingly, the fibres, which are obtained after a drying step as indicated in step (e) referred to above, have a very good water absorption capacity, generally capable of taking up at least seven times their own weight in water. The fibres have the interesting property of improving texture and/or bite in pasta and other food products.

The liquid fraction obtained from the previous step, i.e., step (d), is subjected to acidification. The result thereof is herein referred to as an acid-treated liquid. The acidification is typically done by mixing the liquid fraction with an aqueous acid, such as aqueous hydrochloric acid. Other suitable acids, e.g. formic acid, acetic acid, carbon dioxide (gaseous), or solid acids can also be used. The concentration of the acid typically is in a range of from 0.1 - 1.0 M. The acidification is conducted such as to bring the pH of the liquid fraction down to 4 - 4.5 in the acid-treated liquid.

The process is conducted at ambient temperature, such as 15°C to 25°C. As a result of friction, the mass will generally have an elevated temperature of about 30°C to 40°C. In the step of mixing with base as well as in the acidification step, the temperature in these steps is below 30°C. To the extent necessary, the temperature will be controlled by appropriate cooling. Preferably the temperature is kept sufficiently homogeneous so as to prevent hot spots to occur.

The process further comprises subjecting the acid-treated liquid to separation so as to obtain an aqueous process liquid and a liquid gel. This separation suitably is conducted by a centrifugal technique, using a customary decanter, separator, purifier or hydrocyclone; The decantate is a process liquid that generally comprises salts and sugars. The residue is a liquid gel comprising proteins which is further subjected to concentration and/or drying steps. Concentrating the gel can be suitably performed by microfiltration, which results in water being removed as a filtrate, and a thickened gel as a retentate. It is also possible to subject the gel to drying techniques such as evaporation or freeze drying techniques. The drying will most typically involve spray-drying, using conventional atomizing equipment. Ultimately, a dry product is obtained comprising the protein. It is conceivable to isolate the product as an aqueous, thickened gel in one place, and subject it to drying and, e.g., packaging in another place (e.g. in the event of a pumpable gel transported from a protein recovery facility to a food ingredient packaging facility).

The invention also pertains to a protein composition as such. This refers to a protein composition obtainable by the process described above, in any embodiment thereof, or combination of embodiments. The composition results from applying a process of a type more typically used for aquatic species such as duckweed (e.g. *Lemna spp*.)*,* to *Allium cepa,* such as onions. This results in a product comprising the proteins in a concentration that has hitherto not been achieved. Thus, the protein composition of the invention comprises 25 wt.% to 30 wt.% of protein recovered from the *Allium* bulbs, such as onions. Most preferably, in any of the foregoing embodiments, the composition of the invention is obtained as a dry powder. The remaining components of the composition are typically carbohydrates, and/or dietary fibres, ash, and small molecular weight compounds, such as peptides, amino acids and sugars.

The protein compositions of the invention are suitable for use as a food ingredient. Thereby, by virtue of the protein compositions made available by the invention, a most desired, and unexpected property of these compositions has been retrieved. Accordingly, the protein compositions of the invention have the interesting property of being suitable as taste enhancers. Whilst onion as such is known to lend taste to many food recipes, this has not been known to be an effect associated with a protein composition such as obtainable by the process of the invention.

Most particularly, the composition of the invention has interesting properties for use in a seasoning lending an umami taste to foods. Umami is considered one of the five basic tastes, and its taste perception is specifically associated with glutamate receptors. A problem in the art is that the most widely used umami seasoning is monosodium glutamate. This umami taste enhancer is increasingly subject to scrutiny, on account of safety issues, associated with various adverse health effects. In view hereof, the industry is in need of finding acceptable alternatives for monosodium glutamate. The composition of the invention, particularly as obtainable by the process of the invention, can be used in an umami seasoning, e.g. to reduce the amount of monosodium glutamate. In this respect, the invention also relates to the use of the composition as substantially described hereinbefore, in an umami seasoning.

In a further interesting embodiment, the composition of the invention is obtained from red onions. Surprisingly, this composition has the properties of a heat-stable red colouring agent. As such, this composition is suitable as an in the art much sought after red colourant in food. This presents an interesting alternative for carminic acid which is obtained from cochineal.

The invention is hereinafter illustrated with reference to the following example, and the accompanying figure. The example and figure are not intended to be limiting to the invention.

### Example

Into a dissolver tank, 1000 kg of an aqueous composition of 13% dry matter of onion residues is mixed with 1000 kg of water, and milled so as to result in pumpable slurry. To the pumpable slurry a 3% m/m sodium hydroxide solution is added until the pH of the aqueous slurry is 8.2. Thereafter the slurry is pumped to a filter press, so as to bring about dehydration. In the filter press a protein-rich liquid is separated from insoluble matter, by pressing and filtering. The insoluble matter is obtained largely in the form of onion fibres (550 kg of an aqueous composition comprising 12.5% dry, undissolved matter). The pH of the protein-rich liquid will generally have dropped below pH 8, and will be brought back to pH 8.2 by further addition of sodium hydroxide. Thereupon fines are removed, in this example by means of decanting. In a next step, aqueous hydrochloric acid (3% m/m) is added so as to lower the pH of the protein-rich liquid to 4.2, so as to form a protein gel. Again using a decanter, the resulting protein gel is separated from a clarified liquid fraction (which typically comprises sugars and/or salts). The gel is subjected to drying, so as to obtain a dry onion protein concentrate. The aforementioned steps are depicted in the general process scheme of Fig. 1. The figure depicts a process scheme that represents a preferred embodiment of the invention in general terms. The specific numbers given for the amounts of starting materials and products, and the specific percentages of dry matter (DM), are based on the example and serve as an illustration only. The general process scheme as shown is not limited by these numbers, or by the specific ingredients. Rather, the process scheme can be applied to other materials of bulbs of plants belonging to the genus *Allium,* in accordance with the detailed description of the invention. Also, the pH adjusting agents are not limited to aqueous sodium hydroxide and aqueous hydrochloric acid, but rather extend to other bases and acids. It will be understood that the pH values in the example are illustrations, and other pH values can be applied, such as indicated in the detailed description of the invention.

In the table below, the composition is given of the onions and of the products obtained therefrom in accordance with the invention.

**Table**

| | Dried onions | Onion protein concentrate | Onion fibre composition |
|---|---|---|---|
| Component | % | % | % |
| Protein | 10 | 27 | 8 |
| Carbohydrates | 61 | 41 | 22 |
| Lipids | 1 | 6 | 1 |
| Fibres | 20 | 19 | 63 |
| Ash | 8 | 7 | 6 |

## Claims

1. A protein composition in the form of a dry protein concentrate comprising 25 wt.% to 30 wt.% of protein obtainable from bulbs of a plant of the species *Allium cepa* by a process comprising the steps of:
(a) providing a mass comprising material of the *Allium cepa* bulbs;
(b) subjecting the material to a mechanical treatment selected from the group consisting of disrupting, homogenization, and a combination thereof;
(c) combining the mass with a basic substance under mixing, so as to obtain an aqueous slurry, wherein the basic substance is a basic liquid having a pH of from 8 to 9;
(d) subjecting the slurry to separation so as to obtain a liquid fraction and one or more solid fractions;
(e) optionally subjecting the solid fraction(s) obtained under (d) to concentration and/or drying steps so as to obtain a dry product comprising the fibres;
(f) subjecting the liquid fraction to acidification so as to obtain an acid-treated liquid having a pH in a range of from 4 - 4.5;
(g) subjecting the acid-treated liquid to separation so as to obtain an aqueous process liquid and a liquid gel;
(h) subjecting the liquid gel to concentration and/or drying steps so as to obtain a dry product comprising the protein,
said process being conducted at ambient temperature, wherein in steps (c) and (f) the temperature is below 30 °C, the temperature being controlled by appropriate cooling to the extent necessary.

2. A protein composition according to claim 1, in the form of a dry powder.

3. A protein composition according to any one of the preceding claims. obtainable from red onions.

4. The use of a protein composition according to any one of the claims 1 to 3, as a food ingredient, particularly as a taste enhancer.

5. A use according to claim 4, in an umami seasoning.

6. The use of a protein composition according to claim 3, as a red colouring in food.

7. A process for the recovery of a protein-rich fraction and a fibre-rich fraction from bulbs of the species *Allium cepa,* the process comprising the steps of:
(a) providing a mass comprising material of the *Allium cepa* bulbs;
(b) subjecting the material to a mechanical treatment selected from the group consisting of disrupting, homogenization, and a combination thereof;
(c) combining the mass with a basic substance under mixing, so as to obtain an aqueous slurry, wherein the basic substance is a basic liquid having a pH of from 8 to 9;
(d) subjecting the slurry to separation so as to obtain a liquid fraction and one or more solid fractions;
(e) subjecting the solid fraction(s) obtained under (d) to concentration and/or drying steps so as to obtain a dry product comprising the fibres;
(f) subjecting the liquid fraction to acidification so as to obtain an acid-treated liquid having a pH in a range of from 4 - 4.5;
(g) subjecting the acid-treated liquid to separation so as to obtain an aqueous process liquid and a liquid gel;
(h) subjecting the liquid gel to concentration and/or drying steps so as to obtain a dry product comprising the protein,
said process being conducted at ambient temperature, wherein in steps (c) and (f) the temperature is below 30 °C, the temperature being controlled by appropriate cooling to the extent necessary.

8. A process according to claim 7, wherein the mass comprises the skins and tops residues of onions processed for use as a food.

9. A process according to claim 7, the process comprising subjecting skins and tops residues of onions to the process as defined in claim 7, and isolating a dry protein concentrate comprising 20 wt.% to 30 wt.% of protein and a fibre-containing composition comprising 60% to 70% by weight of fibre.

## Patentansprüche

1. Proteinzusammensetzung in der Form eines trockenen Proteinkonzentrats, umfassend 25 Gew.-% bis 30 Gew.-% Protein, erhältlich aus Bulben einer Pflanze der Spezies *Allium cepa* durch ein Verfahren, umfassend die Schritte von:
(a) Bereitstellen einer Masse, umfassend Material der *Allium-cepa-*Bulben;
(b) Unterziehen des Materials einer mechanischen Behandlung, ausgewählt aus der Gruppe bestehend aus Spalten, Homogenisieren, und einer Kombination davon;
(c) Kombinieren der Masse mit einer basischen Substanz unter Mischen, um eine wässrige Suspension zu erhalten, wobei die basische Substanz eine basische Flüssigkeit mit einem pH von von 8 bis 9 ist;
(d) Unterziehen der Suspension einer Trennung, um eine flüssige Fraktion und eine oder mehrere feste Fraktionen zu erhalten;
(e) optionales Unterziehen der festen Fraktion(en), erhalten unter (d), Konzentrations- und/oder Trocknungsschritten, um ein trockenes Produkt, umfassend die Ballaststoffe, zu erhalten;
(f) Unterziehen der flüssigen Fraktion einer Ansäuerung, um eine säurebehandelte Flüssigkeit mit einem pH in einem Bereich von von 4 bis 4,5 zu erhalten;
(g) Unterziehen der säurebehandelten Flüssigkeit einer Trennung, um eine wässrige Verfahrensflüssigkeit und ein flüssiges Gel zu erhalten;
(h) Unterziehen des flüssigen Gels Konzentrations- und/oder Trocknungsschritten, um ein trockenes Produkt, umfassend das Protein, zu erhalten,
wobei das Verfahren bei Umgebungstemperatur durchgeführt wird, wobei in Schritten (c) und (f) die Temperatur unter 30 °C ist, wobei die Temperatur durch adäquate Kühlung in dem erforderlichen Ausmaß gesteuert wird.

2. Proteinzusammensetzung nach Anspruch 1 in der Form eines Trockenpulvers.

3. Proteinzusammensetzung nach einem der vorhergehenden Ansprüche, erhältlich aus roten Zwiebeln.

4. Verwendung einer Proteinzusammensetzung nach einem der Ansprüche 1 bis 3 als ein Lebensmittelinhaltsstoff, insbesondere als ein Geschmacksverstärker.

5. Verwendung nach Anspruch 4 in einem Umami-Würzmittel.

6. Verwendung einer Proteinzusammensetzung nach Anspruch 3 als ein rotes Färbemittel in Lebensmitteln.

7. Verfahren zur Gewinnung einer proteinreichen Fraktion und eine ballaststoffreichen Fraktion aus Bulben der Spezies *Allium cepa,* das Verfahren umfassend die Schritte von:
(a) Bereitstellen einer Masse, umfassend Material der *Allium-cepa-*Bulben;
(b) Unterziehen des Materials einer mechanischen Behandlung, ausgewählt aus der Gruppe bestehend aus Spalten, Homogenisieren, und einer Kombination davon;
(c) Kombinieren der Masse mit einer basischen Substanz unter Mischen, um eine wässrige Suspension zu erhalten, wobei die basische Substanz eine basische Flüssigkeit mit einem pH von von 8 bis 9 ist;
(d) Unterziehen der Suspension einer Trennung, um eine flüssige Fraktion und eine oder mehrere feste Fraktionen zu erhalten;
(e) Unterziehen der festen Fraktion(en), erhalten unter (d), Konzentrations- und/oder Trocknungsschritten, um ein trockenes Produkt, umfassend Ballaststoffe, zu erhalten;
(f) Unterziehen der flüssigen Fraktion einer Ansäuerung, um eine säurebehandelte Flüssigkeit mit einem pH in einem Bereich von von 4 bis 4,5 zu erhalten;
(g) Unterziehen der säurebehandelten Flüssigkeit einer Trennung, um eine wässrige Verfahrensflüssigkeit und ein flüssiges Gel zu erhalten;
(h) Unterziehen des flüssigen Gels Konzentrations- und/oder Trocknungsschritten, um ein trockenes Produkt, umfassend das Protein, zu erhalten,
wobei das Verfahren bei Umgebungstemperatur durchgeführt wird, wobei in den Schritten (c) und (f) die Temperatur unter 30 °C ist, wobei die Temperatur durch adäquate Kühlung in dem erforderlichen Ausmaß gesteuert wird.

8. Verfahren nach Anspruch 7, wobei die Masse die Reste von Häuten und oberen Enden von Zwiebeln umfasst, die zur Verwendung als ein Lebensmittel verarbeitet werden.

9. Verfahren nach Anspruch 7, das Verfahren umfassend Unterziehen von Resten von Häuten und oberen Enden von Zwiebeln dem Verfahren, wie definiert in Anspruch 7, und Isolieren eines trockenen Proteinkonzentrats, umfassend 20 Gew.-% bis 30 Gew.-% Protein, und einer ballaststoffhaltigen Zusammensetzung, umfassend 60 Gew.-% bis 70 Gew.-% Ballaststoff.

## Revendications

1. Composition protéique sous la forme d'un concentré de protéines sèches comprenant de 25 % en poids à 30 % en poids de protéines obtenues à partir de bulbes d'une plante de l'espèce *Allium cepa* par un procédé comprenant les étapes suivantes :
(a) fournir une masse comprenant de la matière des bulbes *d'Allium cepa ;*
(b) soumettre la matière à un traitement mécanique choisi dans le groupe comprenant la brisure, l'homogénéisation et une combinaison de celles-ci ;
(c) combiner la masse avec une substance basique sous mélange, afin d'obtenir une suspension aqueuse, dans laquelle la substance basique est un liquide basique ayant un pH de 8 à 9 ;
(d) soumettre la suspension à une séparation afin d'obtenir une fraction liquide et une ou plusieurs fractions solides ;
(e) soumettre éventuellement la ou les fraction(s) solide(s) obtenues en (d) à des étapes de concentration et/ou de séchage afin d'obtenir un produit sec qui comprend les fibres ;
(f) soumettre la fraction liquide à une acidification afin d'obtenir un liquide traité à l'acide ayant un pH compris dans l'intervalle de 4 à 4,5 ;
(g) soumettre le liquide traité à l'acide à une séparation afin d'obtenir un liquide de traitement aqueux et un gel liquide ;
(h) soumettre le gel liquide à des étapes de concentration et/ou de séchage afin d'obtenir un produit sec qui comprend les protéines,
ledit procédé étant exécuté à température ambiante, dans lequel aux étapes (c) et (f) la température est inférieure à 30 °C, la température étant régulée par un refroidissement approprié dans la mesure nécessaire.

2. Composition protéique selon la revendication 1, sous la forme d'une poudre sèche.

3. Composition protéique selon l'une quelconque des revendications précédentes, obtenue à partir d'oignons rouges.

4. Utilisation d'une composition protéique selon l'une quelconque des revendications 1 à 3, comme ingrédient alimentaire, en particulier comme exhausteur de goût.

5. Utilisation selon la revendication 4, dans un assaisonnement umami.

6. Utilisation d'une composition protéique selon la revendication 3, comme colorant alimentaire rouge.

7. Procédé permettant la récupération d'une fraction riche en protéines et d'une fraction riche en fibres à partir de bulbes de l'espèce *Allium cepa,* le procédé comprenant les étapes suivantes :
(a) fournir une masse comprenant de la matière des bulbes *d'Allium cepa ;*
(b) soumettre la matière à un traitement mécanique choisi dans le groupe comprenant la brisure, l'homogénéisation et une combinaison de celles-ci ;
(c) combiner la masse avec une substance basique sous mélange, afin d'obtenir une suspension aqueuse, dans laquelle la substance basique est un liquide basique ayant un pH de 8 à 9 ;
(d) soumettre la suspension à une séparation afin d'obtenir une fraction liquide et une ou plusieurs fractions solides ;
(e) soumettre la ou les fraction(s) solide(s) obtenues en (d) à des étapes de concentration et/ou de séchage afin d'obtenir un produit sec qui comprend les fibres ;
(f) soumettre la fraction liquide à une acidification afin d'obtenir un liquide traité à l'acide ayant un pH compris dans l'intervalle de 4 à 4,5 ;
(g) soumettre le liquide traité à l'acide à une séparation afin d'obtenir un liquide de traitement aqueux et un gel liquide ;
(h) soumettre le gel liquide à des étapes de concentration et/ou de séchage afin d'obtenir un produit sec qui comprend les protéines,
ledit procédé étant exécuté à température ambiante, dans lequel aux étapes (c) et (f) la température est inférieure à 30 °C, la température étant régulée par un refroidissement approprié dans la mesure nécessaire.

8. Procédé selon la revendication 7, dans lequel la masse comprend les résidus de peaux et de feuilles d'oignons transformés à des fins alimentaires.

9. Procédé selon la revendication 7, le procédé comprenant le fait de soumettre des résidus de peaux et de feuilles d'oignons au procédé défini dans la revendication 7, et d'isoler un concentré de protéines sèches comprenant de 20 % en poids à 30 % en poids de protéines et une composition contenant des fibres comprenant de 60 % à 70 % en poids de fibres.
